(19) **Europäisches Patentamt**
European Patent Office
Office européen des brevets

(11) **EP 1 177 711 B1**

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(21) Anmeldenummer: **01905616.7**

(22) Anmeldetag: **09.01.2001**

(51) Int Cl.:
***H05B 41/24*** *(2006.01)*

(86) Internationale Anmeldenummer:
**PCT/DE2001/000044**

(87) Internationale Veröffentlichungsnummer:
**WO 2001/067827 (13.09.2001 Gazette 2001/37)**

(54) **VERBESSERTES PULSBETRIEBSVERFAHREN FÜR EINE STILLE ENTLADUNGSLAMPE**

IMPROVED PULSED OPERATION METHOD FOR A SILENT DISCHARGE LAMP

PROCEDE DE FONCTIONNEMENT IMPULSIONNEL AMELIORE POUR UNE LAMPE A DECHARGE SILENCIEUSE

(84) Benannte Vertragsstaaten:
**AT BE CH CY DE DK ES FI FR GB GR IE IT LI LU MC NL PT SE TR**

(30) Priorität: **09.03.2000 DE 10011484**

(43) Veröffentlichungstag der Anmeldung:
**06.02.2002 Patentblatt 2002/06**

(73) Patentinhaber: **OSRAM Gesellschaft mit beschränkter Haftung
81543 München (DE)**

(72) Erfinder:
• **VOLLKOMMER, Frank
82131 Buchendorf (DE)**
• **HITZSCHKE, Lothar
81737 München (DE)**

(56) Entgegenhaltungen:
**EP-A- 0 781 078      EP-A- 0 817 542
EP-A- 0 907 306      WO-A-94/23442
WO-A-99/46963**

## Beschreibung

Die vorliegende Erfindung bezieht sich auf ein Betriebsverfahren für eine sogenannte stille Entladungslampe. Darunter versteht man einen Entladungslampentypus, in dem sogenannte dielektrisch behinderte Entladungen zur Lichterzeugung ausgenutzt werden. Die dielektrische Behinderung der Entladung entsteht durch eine dielektrische Schicht zwischen dem Entladungsmedium der Entladungslampe und zumindest einer der Elektroden. Stille Entladungslampen an sich sind Stand der Technik und werden hier nicht im einzelnen erläutert.

Die vorliegende Erfindung baut auf auf einem von denselben Erfindern entwickelten Betriebsverfahren zur gepulsten Wirkleistungseinkopplung in eine stille Entladungslampe. Hierzu wird verwiesen auf die WO94/23442, deren Offenbarungsgehalt hier durch Inbezugnahme mit inbegriffen ist. Das dort dargestellte Betriebsverfahren bildet die Grundlage der im folgenden beschriebene Erfindung. Wesentlich ist vor allem, daß zwischen einzelnen Pulsen einer Wirkleistungseinkopplung in die Entladungslampe sogenannte Totzeiten ohne wesentliche Wirkleistungseinkopplung eingelegt werden, und die Länge dieser Totzeiten bis zu einem neuen Wirkleistungseinkopplungspuls so bemessen wird, daß sich ein bestimmter in der zitierten Anmeldung dargestellter Entladungstypus mit besonders hoher Entladungseffizienz ausbildet. Dazu dürfen die Totzeiten nicht zu lang sein, weil dann jeder Wirkleistungspuls quasi als Neuzündung zu bewerten ist und sich durch das Fehlen eines Zusammenhangs zwischen den einzelnen Wirkleistungspulsen keine gute Effizienz, keine ausreichende Lampenleistung und auch keine gute zeitliche und örtliche Stabilität erzielen läßt. Wenn die Totzeiten zwischen den Wirkleistungspulsen andererseits zu kurz bemessen sind, so bilden sich fadenförmige Entladungen aus, die eine schlechte Effizienz und daneben eine schlechte zeitliche und örtliche Stabilität zeigen.

WO-00/13472 hat ein Betriebsverfahren und ein Vorschaltgerät für eine stille Entladungslampe vorgeschlagen, mit denen sich das geschilderte Pulsbetriebsverfahren der WO94/23442 besonders gut realisieren läßt. WO-00/13472 bildet eine technische Grundlage für die im folgenden dargestellte Erfindung. Daher wird auch auf den Offenbarungsgehalt dieser zweiten Voranmeldung vollinhaltlich Bezug genommen.

Insbesondere ist in WO-00/13472 vorgeschlagen worden, ein Vorschaltgerät nach dem Flußwandlerprinzip einzusetzen, bei dem aus einem Primärkreis über einen Transformator ein Spannungspuls in einen die Entladungslampe enthaltenden Sekundärkreis eingeprägt wird, der zu einer Zündung (im folgenden Hinzündung genannt) in der Entladungslampe führt. Dabei ist das Betriebsverfahren so ausgelegt, daß nach der Hinzündung in der Entladungslampe eine Schwingung im Sekundärkreis einsetzt, durch die die äußere Spannung an der Entladungslampe, die zuvor die Hinzündung bewirkt hat, bewirkende Ladung von der Entladungslampe abgezogen wird. Daraufhin kann die verbleibende innere Gegenpolarisation in der Entladungslampe zu einer Rückzündung führen. Zu den Einzelheiten dieses Grundprinzips wird auf die zitierte Anmeldung verwiesen.

Insbesondere ist es bereits in der zitierten Anmeldung als bevorzugter Fall dargestellt worden, daß der zeitliche Abstand zwischen Hinzündung und Rückzündung so kurz ist, daß er nicht als Totzeit im Sinne des gepulsten Betriebsverfahrens anzusehen ist. Die oben erwähnten Totzeiten treten also zwischen jeweils einer Rückzündung und der darauf folgenden Hinzündung, jedoch nicht zwischen dieser Hinzündung und der auf sie folgenden Rückzündung auf. Davon wird auch im folgenden ausgegangen. Das in der zweiten zitierten Anmeldung beschriebene Betriebsverfahren war unter der Zielsetzung entwickelt worden, einen günstigen Gesamtkompromiß hinsichtlich der Leistungseffizienz, des Bauvolumens und -gewichts des zugehörigen Vorschaltgeräts sowie der Herstellungskosten, Lebensdauer und Ausfallhäufigkeit zu erzielen.

Darstellung der Erfindung

Insgesamt liegt der vorliegenden Erfindung das technische Problem zugrunde, das beschriebene Betriebsverfahren nach dem Flußwandlerprinzip weiter zu verbessern. Insbesondere sollen bei kleinem Bauvolumen und -gewicht bei guter Effizienz möglichst hohe Lampenleistungen betrieben werden können.

Erfindungsgemäß ist hierzu gemäß Anspruch 1 vorgesehen, daß bei dem beschriebenen Betriebsverfahren eine für die zeitliche Veränderung eines Stroms durch den Transformator maßgebliche Induktivität innerhalb eines eine Hinzündung und eine Rückzündung enthaltenden Zeitraums zeitlich so verändert wird, daß die veränderte Induktivität in einer Anfangsphase der Einprägung des zu der Hinzündung führenden Spannungspulses wesentlich größer ist als in zumindest einem Teil der Rückzündungsphase, in der die Ladung von der Entladungslampe nach der Hinzündung abgezogen wird und die Rückzündung erfolgt.

Ebenso richtet sich die Erfindung auf ein für dieses Betriebsverfahren ausgelegtes Vorschaltgerät sowie ein Beleuchtungssystem aus einem solchen Vorschaltgerät und einer stillen Entladungslampe.

Dabei liegen folgende Erkenntnisse zugrunde: Für die physikalische Natur und damit auch die Effizienz der stillen Entladung in der Entladungslampe ist das zeitliche Veränderungsverhalten der äußeren Spannung an der Entladungslampe von Bedeutung. Insbesondere hat sich dabei herausgestellt, daß bei dem gepulsten Betriebsverfahren keine zu großen Pulsbreiten für eine Zündung gewählt werden sollten. Die besondere Effizienz des gepulsten Betriebsverfahrens baut vielmehr darauf auf, daß nach einem relativ kurzen Puls der Wirkleistungseinkopplung wieder eine Totzeit einsetzt. Dementsprechend muß der Spannungspuls an der Lampe und demzufolge auch der zugehörige Primärstrompuls in dem Transformator relativ kurz sein.

Insbesondere führt die Rückzündung zu einer umso effizienteren und vollständigeren Umsetzung der im Sekundärkreis gespeicherten Energie, je schneller der Sekundärkreis bei der zu der Rückzündung führenden Teilschwingung und während der Rückzündung, also nach dem Durchzünden infolge der inneren Gegenpolarisation, durchschwingt. Es wird also angestrebt, die Eigenfrequenz bzw. Schnelligkeit des Sekundärkreises möglichst hoch zu wählen. Für diese Schnelligkeit spielt die durch den Transformator im Sekundärkreis gegebene Induktivität eine wesentliche Rolle.

Andererseits hat sich allerdings auch herausgestellt, daß übermäßig steile Anstiegsflanken der Spannung am Beginn eines zu einer Hinzündung führenden Pulses, also auch übermäßig steile Anstiegsflanken, am Beginn des Primärstromanstiegs, die Entladungsphysik der Hinzündung wiederum ungünstig beeinflussen können. Es ist offenbar so, daß dem Entladungsgeschehen ganz am Beginn des Feldaufbaus günstigerweise noch genügend Zeit gelassen werden sollte, eine optimale Form der durch das gepulste Betriebsverfahren ermöglichten Entladungsstrukturen vorzubereiten. Eine zu kleine Transformatorinduktivität könnte hier ungünstig steile Anstiegsflanken verursachen. Damit könnte sich die Effizienz der Entladung wiederum verschlechtern. Wenn durch eine ausreichend große Primärkreisinduktivität sichergestellt ist, daß die Hinzündung eine für eine sehr gute Effizienz geeignete physikalische Grundform hat, so wird an dieser Grundtatsache durch die Schnelligkeit des Primärstrom- bzw. Sekundärkreisspannungsanstiegs im weiteren Verlauf nichts Grundsätzliches mehr geändert. Es wird dann nämlich die von der letzten Rückzündung noch remanente Restionisation durch die sich aufbauenden elektrischen Felder geeignet für die neue Zündung vorgeprägt.

Allerdings können die durch den Transformator im Primärkreis und im Sekundärkreis bedingten Induktivitäten grundsätzlich nicht völlig unabhängig voneinander gewählt werden. Daher sieht die Erfindung eine zeitliche Veränderung zumindest einer der für die Ströme durch den Transformator maßgeblichen Induktivitäten vor. Dabei soll insbesondere während der Vorbereitung der Hinzündung, also in der Anfangsphase des Primärstromanstiegs, im Primärkreis keine zu kleine Induktivität vorliegen. Andererseits soll die Sekundärkreisinduktivität zumindest zu einem Teil der aus der Vorbereitung der Rückzündung und der Rückzündung selbst bestehenden Rückzündungsphase relativ klein sein. Wann genau die zeitlichen Induktivitätsveränderungen stattfinden, ist bei der Erfindung in ihrer grundlegenden Definition nicht ganz genau festgelegt. Nicht bei allen Ausführungsformen der Erfindung besteht diesbezüglich auch eine völlige Wahlfreiheit.

Einerseits können solche zeitlichen Induktivitätsveränderungen durch ein zeitlich veränderliches Hinzuschalten einer weiteren Induktivität erfolgen. Durch eine Parallelschaltung einer weiteren Induktivität wird eine vorgegebene Transformatorinduktivität dabei verringert, durch eine Serienschaltung wird sie vergrößert. Dies kann prinzipiell im Primärkreis und/oder auch im Sekundärkreis geschehen. Technisch einfacher ist dabei eine entsprechende Schaltung im Primärkreis. Als Schaltelemente können in gleicher Weise Transistorschalter verwendet werden, wie dies für die Taktung im Primärkreis gemäß den Erläuterungen in der zitierten zweiten Voranmeldung vorgesehen ist. Die Ansteuerung solcher Transistorschalter kann dabei synchron zu der und auch durch dieselbe Steuereinrichtung wie bei der Taktung des Primärkreisstroms erfolgen, wobei die Schaltzeitpunkte im Prinzip frei gewählt werden können.

Ein besonders bevorzugter Aspekt der Erfindung betrifft andererseits jedoch eine gewissermaßen selbsttätig zeitlich veränderliche Auslegung der Induktivität, indem der Transformator in einem über im allgemeinen bei Leistungsübertragern übliche Aussteuerungen hinausgehenden Sättigungsbetrieb verwendet wird. Dies bedeutet, daß der Transformator vorzugsweise so ausgelegt ist, daß er in bestimmten Betriebsphasen nicht nur "tolerierterweise" am Rand seiner Aussteuerung knapp in die Sättigung gerät, sondern ein wesentlicher Teil seiner Aussteuerung bereits im Sättigungsbereich liegt. Durch die bei der Sättigung des Transformatorkerns erfolgende deutliche Verringerung der relativen Permeabilität des Kernmaterials erfolgt dabei eine erhebliche Verringerung der Transformatorinduktivität im Sättigungsbereich. Darüberhinausgehend hat sich bei den Versuchen der Erfinder herausgestellt, daß die Transformatorverluste bei einer weiteren Leistungssteigerung bei vorgegebener Größe des Vorschaltgeräts einen wesentlichen Problempunkt darstellen. Dies bewirkt in der Praxis, daß die thermischen Verluste im Transformator ab einer gewissen Leistung zu einer intolerablen Effizienzverschlechterung und thermischen Instabilität führen.

Die konventionelle fachmännische Konsequenz aus der Tatsache, daß die Transformatorenverluste mit höherer Aussteuerung zunehmen, wäre eine Vergrößerung des Transformators, um dabei die Aussteuerung verringern zu können. Es gilt nämlich bei Leistungsübertragung die allgemeine Faustregel, höhere Aussteuerungen der Kernmaterialien über 150 mT zu vermeiden, um die Verluste beherrschbar zu halten. Denn die volumenspezifischen magnetischen Verluste in den Kernmaterialien nehmen mit zunehmender Aussteuerung sehr stark zu. Sie haben im übrigen auch noch eine Frequenzabhängigkeit, die hier jedoch nicht weiter interessiert. Bei den üblicherweise verwendeten Ferritmaterialien ist man bei 150 mT noch vom Sättigungsbereich entfernt, wie sich aus den bei den Ausführungsbeispielen dargestellten quantitativen Betrachtungen ergibt.

Die Erfindung geht hier genau den entgegengesetzten Weg, weil sich herausgestellt hat, daß die Transformatorverluste bei einer sehr intensiven Aussteuerung eines vergleichsweise kleinen Transformators, durchaus beherrschbar sind. Schließlich treten die Transformatorverluste im wesentlichen im Hysteresebereich des Transformatorkems auf. Ab einer an den Sättigungsbereich herankommenden Aussteuerung des Transformators werden diese Hystereseverluste dann praktisch nicht mehr größer. Andererseits kann durch sehr starke Aussteuerung des Transformators ein entsprechend kleinvolumiger Transformator verwendet werden. Damit sind zwar die Transformatorverluste auf das Kemvolumen bezogen hoch, wegen des kleinen Kemvolumens jedoch absolut gesehen nicht übermäßig. Es hat sich insgesamt herausgestellt, daß sich zusammen mit der weiteren Verbesserung der Entladungseffizienz insgesamt eine Effizienzsteigerung erzielen läßt, und dabei dennoch das Bauvolumen und- gewicht des Vorschaltgeräts, das wesentlich durch den Transformator bedingt ist, erheblich verringert werden kann.

An dieser Stelle ist anzumerken, daß sich die Ausführungen in dieser Beschreibung und der Wortlaut der Ansprüche natürlich in gleicher Weise auf die Verwendung von zwei oder mehreren Transformatoren anstelle eines einzigen bezieht. Dies stellt technisch gesehen nur eine Aufteilung des Transformators, aber keine prinzipielle Veränderung dar.

Die Aussteuerung des Transformators ist dabei durch das magnetische Feld in dem Transformatorkern gegeben. Eine Sättigung tritt daher vor allem während der Rückzündungsphase auf, weil hier relativ große Sekundärströme fließen können, ohne daß dies von entsprechend großen Primärströmen begleitet wird. Bei ausreichend großen Sekundärströmen während der Rückzündung tritt eine Sättigung insbesondere schon am Beginn der Rückzündung auf, so daß der Sekundärkreis infolge der verringerten Eigenfrequenz schnell und ausgeprägt durchschwingen kann. Während der Hinzündungsphase treten gleichzeitig größere Primärströme und Sekundärströme auf. Die Sekundärströme sind so gerichtet, daß sie die sie erzeugende positive Zeitableitung der magnetischen Induktion abschwächen, also die magnetische Induktion bei positiver Zeitableitung durch ein entsprechendes Gegenfeld teilkompensieren. Es ist daher im Rahmen der Erfindung nicht festgelegt, ob es in der Hinzündungsphase zu einer Sättigung des Transformators kommt. Dies kann durch eine entsprechend hochohmige Impedanz der Last im Sekundärkreis und dementsperchend geringe Stärke der Sekundärströme, also geringen Kompensationseffekt, durchaus geschehen. Es ist jedoch für die Erfindung nicht notwendig. Jedenfalls wird der Sättigungseffekt nicht am unmittelbaren Anfang der Hinzündungsphase vorliegen, da dort selbst die Primärströme für sich genommen zu klein sind. Zur Veranschaulichung wird auf die bei den Ausführungsbeispielen erläuterten Stromverlaufskurven verwiesen.

In Zusammenhang mit der bereits erläuterten Verringerung der Transformatorinduktivität im Sekundärkreis und dadurch erhöhten Schnelligkeit des Sekundärkreises kann es noch zu einem weiteren erwünschten Effekt kommen. Die Transformatorinduktivität bestimmt nicht nur die Geschwindigkeit von Umladevorgängen in dem Sekundärkreis, sie ist zusammen mit der gewöhnlich im wesentlichen durch die Entladungslampe definierten Sekundärkreiskapazität und den Ohmschen Widerständen im Sekundärkreis für die Gesamtimpedanz des Sekundärkreises von Bedeutung. In vielen Fällen ist die Transformatorinduktivität dabei die entscheidende Größe. Eine Verringerung der Transformatorinduktivität im Sekundärkreis hat also eine deutliche Impedanzverringerung im Sekundärkreis und damit die Möglichkeit relativ großer Lampenströme während der Rückzündung zur Folge.

Bezüglich der zitierten Voranmeldung ist noch anzumerken, daß auch bei der hier dargestellten Erfindung vorzugsweise vorgesehen ist, mit Hilfe der Rückzündung eine Restmagnetisierung am Transformator abzubauen. Seinerzeit wurde argumentiert, daß man ohne Abbau dieser Restmagnetisierung eine Sättigung des Transformators befürchten müßte. Damit war allerdings eine Situation gemeint, in der Energiebeträge dauerhaft im Sekundärkreis verbleiben (nämlich der Restmagnetisierung entsprechend) bzw. zwischen Primärkreis und Sekundärkreis hin- und hergeschoben werden, ohne in der Entladungslampe wirklich umgesetzt zu werden. Solche Energiebeträge treten zwar als Leistungen im Vorschaltgerät auf, so daß dieses entsprechend ausgelegt sein muß, erhöhen jedoch nicht die Leistung der Lampe. Sie sind daher möglichst zu vermeiden. Die im Rahmen der hier vorliegenden Erfindung beabsichtigte Sättigung des Transformators betrifft jedoch eine mit jedem Arbeitszyklus immer wieder neu aufgebaute Sättigung, d.h. ist mit Energien bzw. Leistungen verbunden, die vom Primärkreis in den Sekundärkreis und weitestgehend in die Entladungslampe transportiert werden. Insoweit ist ein Sättigungszustand nicht an sich nachteilig, wie obenstehend bereits erläutert.

Auch bei dieser Erfindung ist es bevorzugt, daß der Sekundärkreis durch galvanische Trennung vom Primärkreis nach der Hinzündung als Schwingkreis isoliert ist. Dabei ist es bevorzugt, daß die Primärseite des Transformators nach der Hinzündung geöffnet wird, der Primärkreisstrom also völlig abgeschaltet wird. Es bildet im übrigen unabhängig von den Schwingkreiseigenschaften einen bevorzugten Aspekt der Erfindung, daß der Primärkreisstrom während der Rückzündung praktisch bei Null liegt. Hierzu wird auf die Erläuterungen zu den Sättigungszuständen des Transformators bei den Ausführungsbeispielen verwiesen.

Vorzugsweise ist zum Abschalten des Primärkreisstroms ein Schalter, insbesondere ein Transistorschalter, vorgesehen, der die Primärseite nach der nach dem Flußwandlerprinzip erfolgten Hinzündung öffnet. Hinsichtlich des Vorschaltgeräts und des Beleuchtungssystems zeichnet sich die Erfindung somit durch diesen Schalter und die Auslegung seiner Ansteuereinrichtung aus sowie durch die Auslegung des Transformators bzw. durch eine andere Einrichtung zur Erzielung der zeitlichen Veränderung der Induktivitäten.

Die günstigsten Zeitpunkte für die Unterbrechung des Primärkreisstroms liegen erfindungsgemäß in einem Bereich, in dem der Primärkreisstrom ein Minimum zeigen würde, wenn die Unterbrechung unterbliebe. Wenn nämlich nach der Hinzündung der Primärkreis geschlossen bleiben würde, so würde der Primärkreisstrom nach dem Maximum im Rahmen der Hinzündung, dem Verlöschen der Hinzündung, dem damit wieder stark ansteigenden Ohmschen Widerstand der Entladungslampe und der entsprechenden Stromabnahme ein Zwischenminimum zeigen. Danach würde der Primärkreisstrom wieder gemäß den Eigenschaften des Transformators zeitlich ansteigen. Dieses Minimum ist ein vorteilhafter Schaltzeitpunkt, weil durch den minimalen Primärkreisstrom auch die Schaltverluste etwa in dem Schalttransistor minimal sind.

Als Schalter eignet sich im übrigen besonders ein MOSFET mit Freilaufdiode. So können vorteilhafterweise auch bei Unterbrechung des eigentlichen Primärkreisstroms im Primärkreis Entmagnetisierungsströme (für die Entmagnetisierung des Transformators) fließen und z.B. einen Speicherkondensator der Leistungsversorgung des Primärkreises aufladen. Somit wäre trotz galvanischer Trennung zwischen Primärkreis und Sekundärkreis - mit den entsprechenden Sicherheitsvorteilen - eine Entmagnetisierungsvorrichtung realisiert.

Bevorzugte Ausführungsformen der Erfindung betreffen bevorzugte quantitative Abgrenzungen in Zusammenhang mit der zeitlichen Induktivitätsveränderung. Die erste dieser Varianten betrifft die Transformatorinduktivität im Primärkreis, die vorzugsweise am Beginn des zu der Hinzündung führenden Spannungspulses, also bei sehr kleinen Strömen, mindestens drei mal so groß ist, vorzugsweise mindestens fünf mal so groß und besonders bevorzugterweise mindestens zehn mal so groß ist wie zumindest in einem Teil der Rückzündungsphase. Demgemäß bewirkt also der Sättigungseffekt im Bezug zu dem Zeitpunkt des ersten Primärkreisstromanstiegs bei der Hinzündung eine Veränderung der Primärkreisinduktivität um zumindest einen Faktor 3 bzw. 5 bzw. 10. Entsprechendes gilt natürlich für die eingangs erwähnte schaltungstechnische Realisierung der zeitlichen Induktivitätsveränderung (auch ohne Sättigungsbetrieb).

Die zweite quantitative Abgrenzungsvariante bezieht sich nur auf den Sättigungsfall und verwendet zur Abgrenzung die magnetische Induktion bzw. Flußdichte (B-Feld) in dem Transformator. Hierbei soll die magnetische Induktion bereits in der Anfangsphase der Rückzündung, wenn der Sekundärstrom zu einem Zeitpunkt 20 % seines Maximums in der Rückzündung erreicht hat, zumindest 70 % der sogenannten magnetischen Sättigungsinduktion des Transformators betragen. Werte über 80 %, besser noch über 90 % und im günstigsten Fall über 95 % der Sättigungsinduktion sind bevorzugt.

Die magnetische Sättigungsinduktion ist eine technische Kenngröße für den Transformatorkern und wird beispielsweise von Herstellern von Transformatoren angegeben. Sie entspricht dem Schnittpunkt einer Tangente an dem Sättigungsteil der Magnetisierungskurve, also des die magnetische Induktion abhängig vom magnetischen Feld darstellenden Graphen, mit der Induktionsachse, also für ein Nullfeld (H=0). Physikalisch gesehen handelt es sich dabei also um die in der Sättigung des Kerns erzielbare Magnetisierung des Kerns ohne Feldbeitrag.

Bei für die Erfindung günstigen Kernmaterialien ergeben sich Sättigungsinduktionen von vorzugsweise zumindest 350 mT, woraus sich erkennen läßt, daß der Transformator unter günstigen Bedingungen weit über den eingangs genannten Wert von 150 mT ausgesteuert wird.

Die durch die erfindungsgemäßen Maßnahmen erzielte Schnelligkeit des Sekundärkreises äußert sich in einer Halbwertsbreite des Sekundärstromes in der Rückzündung von vorzugsweise weniger als 800 ns.

Der Transformatorkern ist vorzugsweise geschlossen, weist also keinen Luftspalt (d.h. einen verschwindend kleinen Luftspalt bei mehrteiligen Kernen oder einen Ringkern) auf und kann vorzugsweise aus einem MnZn-Ferrit bestehen, wobei sich das Material N87 des Herstellers EPCOS AG bzw. ein äquivalentes Material eines anderen Herstellers anbietet. Dabei beträgt die Sättigungsinduktion etwa 370 bis 375 mT.

Das erfindungsgemäße Betriebsverfahren kann als Gegentaktverfahren realisiert sein, wobei die zur Hinzündung führenden Spannungspulse bipolar alternierend erfolgen. Als unipolares Verfahren werden also jeweils gleichgerichtete Spannungspulseinprägungen bezeichnet, bei denen natürlich die Hinzündung und die Rückzündung in der Entladungslampe trotzdem entgegengesetzt gerichtet sind. Jedoch ist ein bipolares Gegentaktverfahren von Vorteil hinsichtlich der in Entladungslampen prinzipiell unvermeidlichen Alkali-Ionenwanderungseffekte (Schwärzungseffekte). Durch ein symmetrisch alternierendes Verfahren können diese grundsätzlich nicht zu einer Schädigung der Lampe führen. Hierbei ist jedoch zu berücksichtigen, daß bereits die erfindungsgemäße Verwendung einer Rückzündung bezüglich dieser Probleme eine erhebliche Verbesserung bringt. Allerdings sind Hin- und Rückzündung nicht unbedingt symmetrisch, so daß also im unipolaren Fall Resteffekte bleiben können.

Weitere bevorzugte elektrotechnische Einzelheiten betreffen zum einen die Verwendung eines keramischen Mehrschichtspeicherkondensators bei der Leistungsversorgung des Primärkreises, wie dies bereits in der zitierten Voranmeldung ausgeführt war. Zum zweiten wird, wie ebenfalls dort ausgeführt, vorzugsweise ein Mittenabgriff der Sekundärwicklung des Transformators als Bezugspotential des Sekundärkreises verwendet.

Wie bereits ausgeführt wurde, bietet die Erfindung nicht nur eine Effizienzverbesserung, sondern vor allem die Möglichkeit, mit sehr kleinen und leichten Vorschaltgeräten relativ große Lampenleistungen zu treiben. Dies ist für manche Anwendungen von entscheidender Bedeutung, weil sich damit nämlich die Möglichkeit bietet, das Vorschaltgerät an Stellen einzubauen, an denen nur begrenzt Raum zur Verfügung steht. Beispielsweise könnte ein erfindungsgemäßes Vorschaltgerät mit einer stillen Entladungslampe in einem Fotokopierer oder einem Scanner in einer Bewegungseinrichtung der stillen Entladungslampe mitfahren, so daß längere und zudem bewegte hochspannungsführende Leitungen vermieden werden können. Ferner bietet sich die Möglichkeit, ein solches Vorschaltgerät in Lampensokkeln zu integrieren, so daß die Entladungslampe mit integriertem Vorschaltgerät als Einheit produziert und verkauft und unproblematisch vom Anwender eingebaut werden kann, beispielsweise in einem Monitor. Diesbezüglich sieht die Erfindung vor, daß die Leitungen zwischen Vorschaltgerät und Entladungslampe höchstens 10 cm Länge aufweisen, noch günstiger ist ein Wert von 5 cm. Ferner ist, wie erwähnt, vorzugsweise eine Integration im Sockelgehäuse der Entladungslampe vorgesehen. Unter einem Sockelgehäuse versteht man im allgemeinen ein direkt an der Entladungslampe angebautes Gehäuse, das die elektrischen Anschlüsse, und im Fall dieser Erfindung zudem auch das Vorschaltgerät, enthält.

Beschreibung der Zeichnungen

Im folgenden wird die Erfindung anhand einiger Ausführungsbeispiele näher erläutert, wobei die einzelnen Merkmale auch in anderen Kombinationen erfindungswesentlich sein können. Insbesondere wird darauf hingewiesen, daß die Erfindung sowohl Verfahrens- als auch Vorrichtungsaspekte hat und die gesamte vorstehende wie nachfolgende Beschreibung im Hinblick auf beide Kategorien zu verstehen ist.In den Figuren zeigt:

Fig. 1 ein schematisches Blockschaltbild eines erfindungsgemäßen Beleuchtungssystems;

Fig. 2 eine optionale Einzelheit zu dem Blockschaltbild aus Fig. 1;

Fig. 3 ein schematisches Blockschaltbild eines weiteren erfindungsgemäßen Beleuchtungssystems als zweites Ausführungsbeispiel;

Fig. 4 eine optionale Einzelheit zu dem Blockschaltbild aus Fig. 3;

Fig. 5 ein schematisches Blockschaltbild eines erfindungsgemäßen Beleuchtungssystem als drittes Ausführungsbeispiel;

Fig. 6 schematische Zeitverlaufsdiagramme zu dem Betrieb des Ausführungsbeispiels aus Fig. 5;

Fig. 7 eine schematische Darstellung der Verschaltung der Transistoren in den Schaltbildern nach Fig. 1 und Fig. 3;

Fig. 8 ein schematisches Diagramm zur Erläuterung des Hystereseeffekts in dem Transformatorkern der Schaltungen aus den Fig. 1 und 3;

Fig. 9 eine tatsächliche Hysteresekurve des praktisch verwendeten Transformatorkernmaterials in Abhängigkeit von der magnetischen Feldstärke;

Fig. 10 ein Diagramm zur Darstellung der Temperaturabhängigkeit magnetischer Verluste in Transformatorkernmaterialien;

Fig. 11 eine Meßkurve mit einem typischen zeitlichen Primärstromverlauf in den Schaltungen aus den Fig. 1 und 3;

Fig. 12 Meßkurven des zeitlichen Primärstromverlaufs und Sekundärstromverlaufs in der Schaltung gemäß Fig. 1;

Fig. 13 eine Ausschnittsdarstellung zur Fig. 12;

Fig. 14 und Fig. 15 in Entsprechung zu Fig. 12 den zeitlichen Primärstromverlauf und Sekundärstromverlauf für die Schaltung aus Fig. 3.

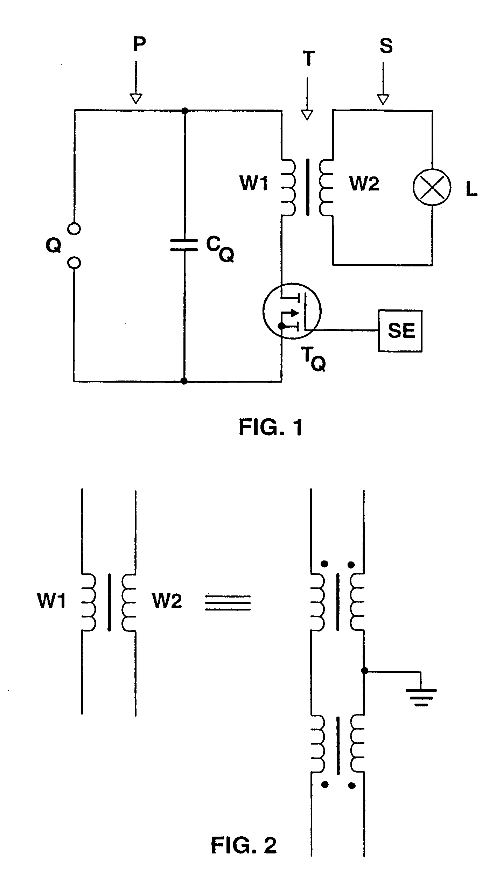

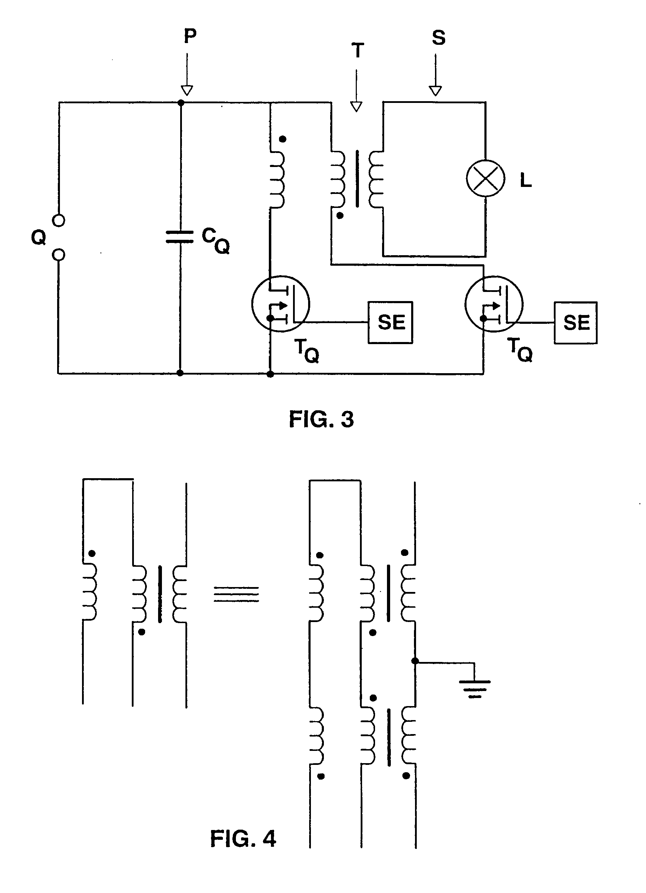

In Fig. 1 ist ein schematisches Blockschaltbild für ein erfindungsgemäßes Beleuchtungssystem dargestellt. Darin ist zunächst mit L eine Entladungslampe dargestellt, die für dielektrisch behinderte Entladungen ausgelegt ist. Ein prinzipielles Ersatzschaltbild für die Entladungslampe L findet sich in der zweiten zitierten Voranmeldung in Fig. 2 und ist dort auch in Bezug auf die dortigen Fig. 3 und 4 im einzelnen erläutert. Für das Verständnis des erfindungsgemäßen Betriebsverfahrens, Beleuchtungssystems und Vorschaltgeräts ist der tatsächliche Aufbau der Entladungslampe L nicht entscheidend.

Die Entladungslampe L ist in einen Sekundärkreis S geschaltet, der neben der Entladungslampe L eine Sekundärwicklung W2 eines Transformators T enthält.

Die Primärwicklung W1 des Transformators T liegt in einem Primärkreis P, der aus einer Leistungsversorgung Q mit Leistung für den Transformator bzw. die Entladungslampe L versorgt ist.

Ferner liegt in einem der Äste zwischen der Leistungsquelle Q und der Primärwicklung W1 ein schneller Schalter $T_Q$. Dabei handelt es sich um einen Leistungs-MOSFET, der von einer Steuereinrichtung SE geschaltet bzw. gesteuert ist.

Parallel zu der Reihenschaltung aus der Primärwicklung W1 und dem Schalter $T_Q$ liegt ein Speicherkondensator $C_Q$. Dieser Speicherkondensator $C_Q$ wird von der Quelle Q nachgeladen, gehört im Grunde zu der Quelle Q und dient zum Anlegen einer Spannung an die Primärwicklung W1 abhängig von dem Schaltzustand des Schalters $T_Q$. Es handelt sich dabei um keramische Mehrschichtkondensatoren.

Bei dem Flußwandler wird in zunächst konventioneller Weise ein Stromfluß durch die Primärwicklung W1 erzeugt, wobei das Wicklungsverhältnis des Transformators T so ausgelegt ist, daß der Stromfluß durch die Primärwicklung W1 in der Sekundärwicklung W2 und damit mittelbar an der Entladungslampe L eine Zündspannung induziert. Wird der Schalter $T_Q$ durch die Steuereinrichtung SE geöffnet, so verbleibt im Sekundärkreis S Energie zumindest in Form einer Restmagnetisierung des Transformators T.

Wie bereits in der Beschreibungseinleitung erläutert, sind zum Abbau dieser Restmagnetisierung konventionellerweise Entmagnetisierungsschaltungen verwendet worden, die z. B. aus einer dritten Wicklung des Transformators T und einer mit dieser Wicklung parallel zu der Reihenschaltung aus der Primärwicklung W1 und dem Schalter $T_Q$ geschalteten Diode bestehen könnte. Über eine solche Entmagnetisierungsschaltung könnte dann in der Sperrphase des Schalter $T_Q$ die Restmagnetisierung des Transformators T abgebaut werden.

Aus Figur 1 ergibt sich direkt, daß zwischen dem Primärkreis P und dem Sekundärkreis S eine vollständige galvanische Trennung vorliegt. Dies ist von erheblichem Sicherheitsvorteil im Hinblick auf die auf der Sekundärkreisseite vorliegenden hohen Spannungen. Ein weiterer Sicherheitsvorteil kann, wie in Fig. 2 dargestellt, dadurch erzielt werden, daß die Sekundärwicklung W2 einen (dritten) Mittenabgriff aufweist, der als geerdetes Bezugspotential des Sekundärkreises S dienen kann. Wenn demgegenüber an die jeweiligen Elektrodengruppen der Entladungslampe L die positiven und negativen Pulse aus der Sekundärwicklung W2 angelegt werden, liegt an der Entladungslampe L nach wie vor die volle Induktionsspannung an, obwohl in der Sekundärkreisschaltung gegenüber dem Mittenabgriffspotential jeweils nur die halbe maximale Spannung als sicherheitsrelevante Spannung auftritt. Tatsächlich handelt es sich hier bei T eigentlich um zwei Transformatoren.

Diese Technik verbessert auch erheblich die elektromagnetische Verträglichkeit hinsichtlich der Abstrahlung aus dem Sekundärkreis. Es wird verwiesen auf die DE 197 34885.8.

Die Schaltdiagramme in den Fig. 3 und 4 entsprechen weitgehend denen in den Fig. 1 und 2 und zeigen eine optionale Ausführung der Erfindung nach einem Gegentaktprinzip. Daher sind die Schaltungszweige aus der Primärwicklung W1 und dem Schalttransistor $T_Q$ mit der Steuereinrichtung SE doppelt ausgeführt. Dabei ist der Wicklungssinn der beiden Primärwicklungen einander entgegengesetzt gerichtet. Somit können durch Betrieb dieser beiden Zweige Spannungspulse entgegengesetzter Polarität im Sekundärkreis S erzeugt werden. Natürlich können die beiden Steuereinrichtungen SE zusammengefaßt sein und geben alternierend Pulse an die beiden Schalttransistoren $T_Q$.

Fig. 4 verdeutlicht, wie im bipolaren Fall die Wicklungsorientierungen bei der Ausführungsform gemäß Fig. 2 mit Mittenabgriff auf der Sekundärseite gewählt werden.

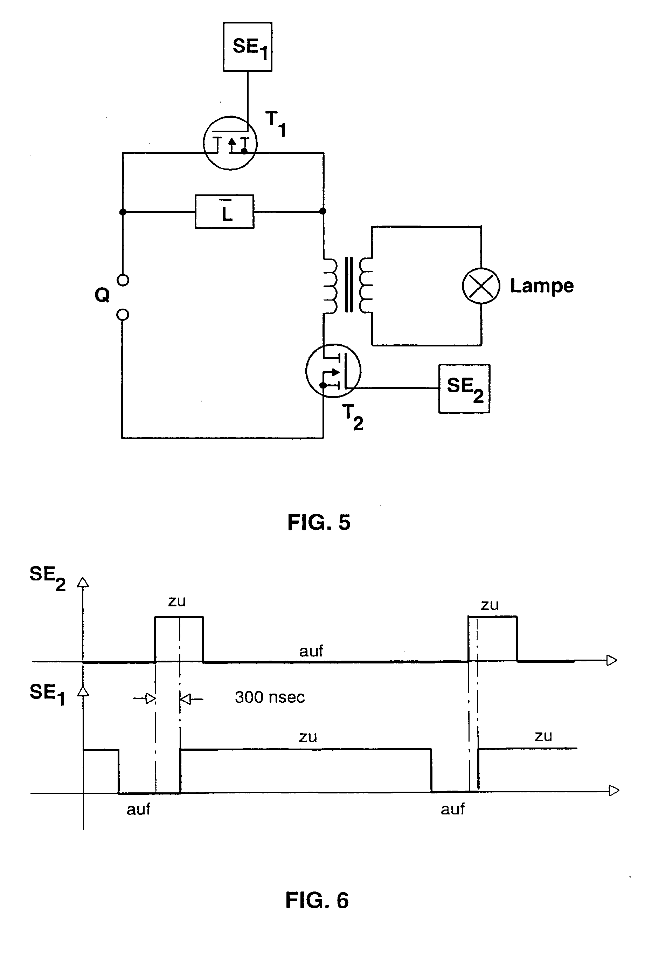

Die Fig. 5 und 6 dienen zur schematischen Illustration einer alternativen Realisierung der Erfindung durch periodisches Erhöhen der Primärkreisinduktivität mit Hilfe einer seriell zu der Primärwicklung W1 liegenden weiteren Induktivität L. Dazu dient eine zu der Induktivität L parallel geschaltete und diese im leitenden Zustand kurzschließende Schalteinrichtung, nämlich ein MOSFET $T_1$ mit einer entsprechenden Steuereinrichtung $SE_1$. Dementsprechend sind die den Schaltern $T_Q$ und den Steuereinrichtungen SE aus den Figuren 1 und 3 entsprechenden Elemente mit $T_2$ und $SE_2$ bezeichnet. Der Speicherkondensator $C_Q$ ist der Einfachheit halber weggelassen.

Aus Fig. 6 ergibt sich, daß durch entsprechendes Öffnen und Schließen des MOSFETS $T_1$ mit Hilfe der Steuereinrichtung $SE_1$, und zwar abgestimmt auf den Betrieb der Steuereinrichtung $SE_2$, eine entsprechende effektive Induktivitätsvergrösserung im Primärkreis in beispielsweise den ersten 300 ns der Pulse möglich ist. Dieses Ausführungsbeispiel dient dazu, klarzustellen, daß die Erfindung nicht nur durch einen Sättigungsbetrieb des Transformators T ausgeführt werden kann. Die folgende Beschreibung anhand der weiteren Figuren bezieht sich jedoch nur noch auf die ersten beiden Ausführungsbeispiele aus den Figuren 1 - 4.

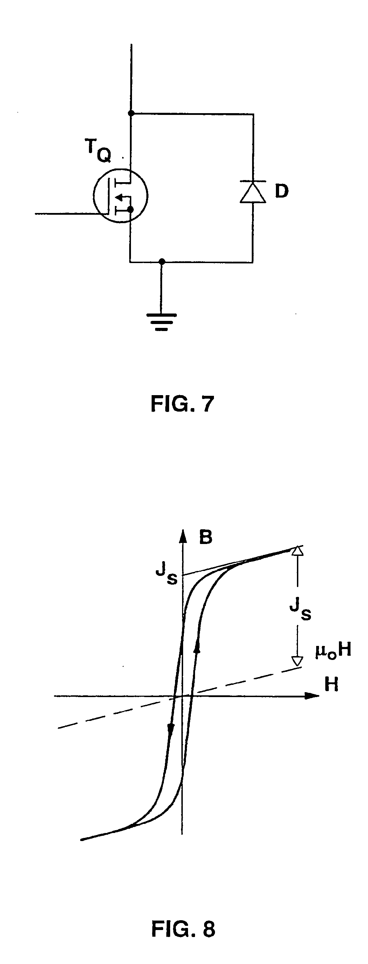

Fig. 7 zeigt eine weitere Einzelheit, nämlich die Verschaltung eines der Schalttransistoren $T_Q$ in den Schaltungen in Fig. 1 und Fig. 3. Dabei weist der Leistungs-MOSFET eine sog. Freilaufdiode D zwischen Source und Drain auf, wobei die Polarität so gewählt ist, daß die Freilaufdiode D im leitenden Zustand, d.h. beim Fließen eines Primärkreisstromes durch den Transistor $T_Q$, sperrt.

Die Freilaufdiode D kann dann im sperrenden Zustand des Transistors $T_Q$ einen Energierückfluß aus dem Sekundärkreis S in den Primärkreis P in Form eines umgekehrten Primärkreisstrom führen, der den Speicherkondensator $C_Q$ auflädt. Dadurch ist eine Entmagnetisierungsmöglichkeit gegeben, die die galvanische Trennung zwischen Primärkreis P und Sekundärkreis S beibehält.

Fig. 8 zeigt schematisch das typische Hystereseverhalten eines magnetischen Materials, also des Kernmaterials in dem Transformator T in den Fig. 1 und 3. Die durch den Wicklungsstrom vorgegebene magnetische Feldstärke H erzeugt eine Magnetisierung J in dem magnetischen Material, die bis zu einer bestimmten Sättigungsmagnetisierung $J_S$ ansteigt. Für die magnetische Induktion (bzw. Flußdichte) B ergibt sich insgesamt

$$B = \mu_0 H + J$$

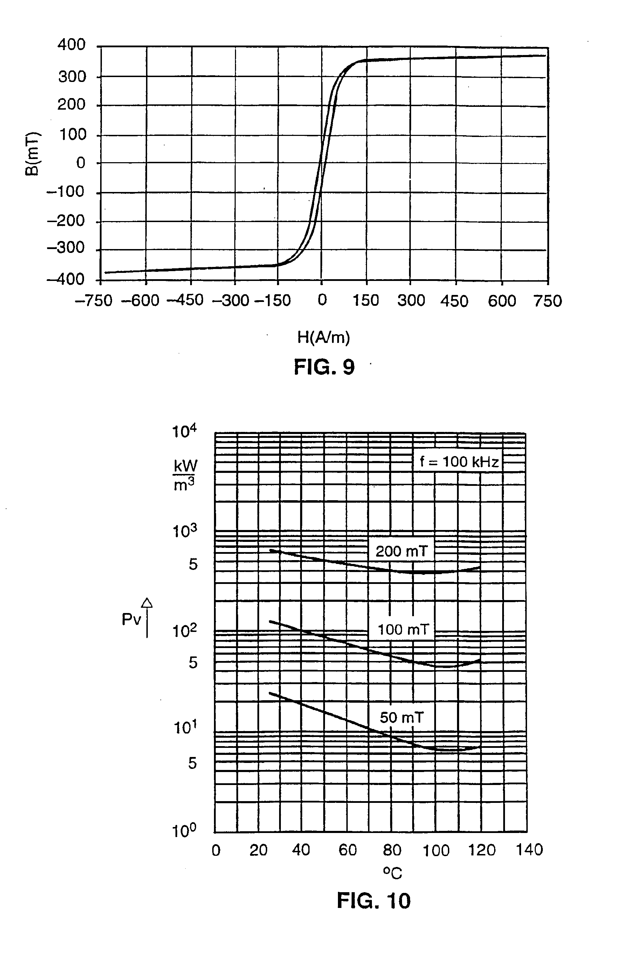

Die Magnetisierung J folgt der Feldstärke H mit einer gewissen Hysterese, weil die Weißschen Bezirke in dem Material ausgerichtet bzw. umorientiert werden müssen. Nach Ausrichtung aller Weißschen Bezirke kommt es zu einer Sättigung, wie sich in Fig. 8 deutlich ablesen läßt. Insgesamt ergibt sich die bekannte Hysteresekurve des Zusammenhangs zwischen der magnetischen Induktion B und Feldstärke H. Der Schnittpunkt einer in Fig. 8 eingezeichneten geraden Tangente an dem mit der Steigung $\mu_0$ steigenden gesättigten Teil der Hysteresekurve mit der B-Achse entspricht also ebenfalls der Sättigungsmagnetisierung $J_S$ bzw. läßt sich auch als magnetische Sättigungsinduktion auffassen. Ihre Bedeutung wird aus der folgenden Fig. 9 deutlicher, die eine tatsächliche Hysteresekurve des hier verwendeten Magnetkernmaterials darstellt. In Fig. 8 ist zur besseren Erkennbarkeit der physikalischen Zusammenhänge nämlich die Steigung $\mu_0$ übertrieben groß eingezeichnet. Tatsächlich verläuft der gesättigte Teil der Hysteresekurve sehr flach.

In Fig. 9 erkennt man mit der tatsächlichen Hysteresekuve (für den Transformatorbetrieb relativ realistische Temperatur von 100° C), daß magnetische Induktionen in der Größenordnung der Sättigungsinduktion und darüber nur durch im Vergleich zu schwächeren Aussteuerungen unverhältnismäßig große magnetische Feldstärken (H) erzeugt werden können. Bei dem hier verwendeten Material (EPCOS N 87, Transformatorringkern ohne Luftspalt, was hier wesentlich ist) sind die Sättigungseffekte ab etwa 200 - 300 mT deutlich spürbar. Tatsächlich würde man nach klassischen Vorstellungen schon den Bereich von 150 mT nicht überschreiten. Bei den im folgenden noch dargestellten quantitativen Beispielen wird sich zeigen, daß dieser Bereich mit der Erfindung deutlich überschritten wird.

Man kann das Sättigungsverhalten aus den Fig. 8 und 9 auch als Feldabhängigkeit der relativen Permeabilität $\mu_{rel}$ (B = $\mu_{rel}\mu_0$H) auffassen, die ab bestimmten Magnetfeldstärken drastisch abnimmt. Jedoch bietet diese Darstellung gegenüber dem B(H)-Zusammenhang aus den Fig. 8 und 9 keine zusätzliche physikalische Substanz.

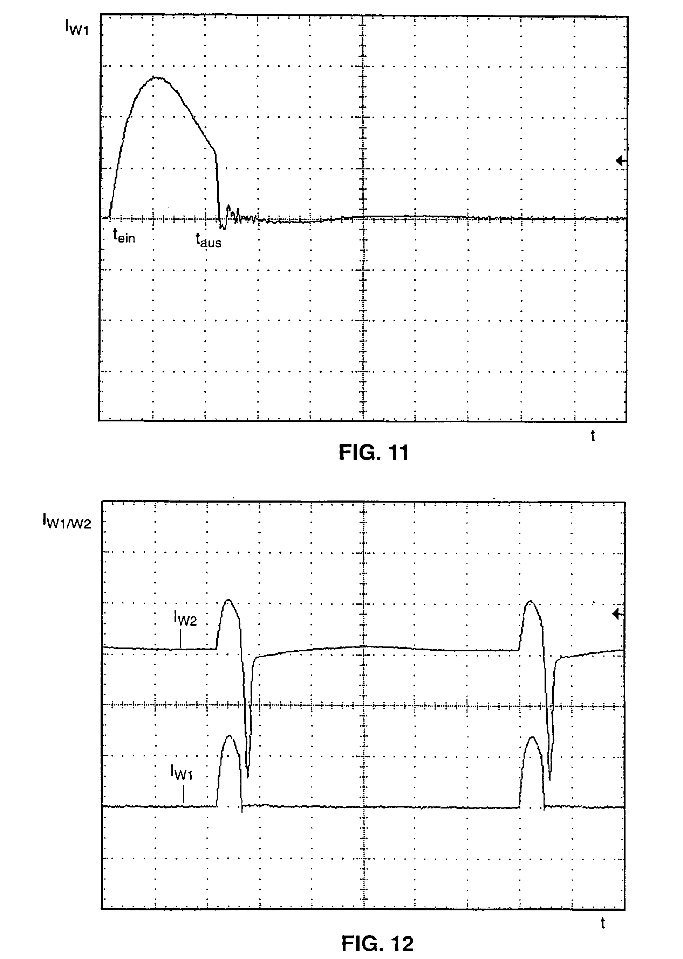

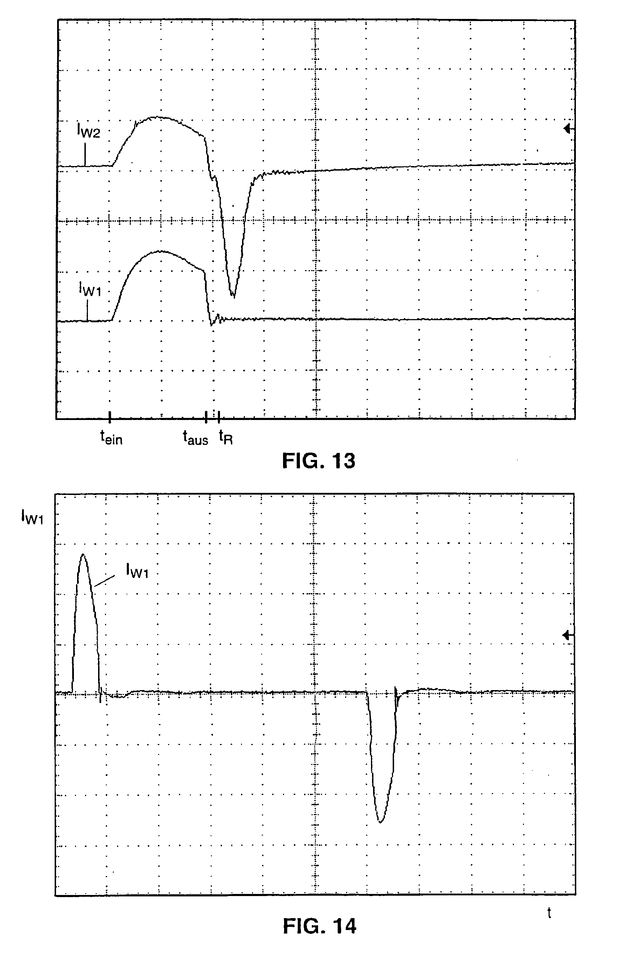

Des weiteren bedeutet das Hystereseverhalten aus den Figuren 8 und 9 Verluste im Transformatorkern, die sich durch eine Erwärmung des Transformators äußern. Gemäß Fig. 10 sind diese Verluste auch temperaturabhängig, wobei sich ein mit zunehmender magnetischer Induktion (Parameter an den Kurven) flacher werdendes und bei etwas niedrigeren Temperaturen liegendes Minimum zeigt. Der in Fig. 10 erkennbare starke Anstieg der Kernverluste Pv (Ordinate) mit zunehmender magnetischer Aussteuerung würde, wie bereits ausgeführt, den Fachmann zunächst dazu bringen, eine schwächere Aussteuerung anzustreben, um die Verluste zu minimieren. Die Erfindung hat nun gezeigt, daß durch eine Aussteuerung des Transformators deutlich in den Sättigungsbereich hinein die Verluste wegen des kleineren Transformatorvolumens und der ab Eintritt der Sättigung nicht mehr zunehmenden Hystereseeffekte durchaus im Rahmen bleiben. Dabei strebt die Erfindung eine Auslegung an, bei der sich die Transformatortemperatur im Bereich des in Fig. 10 erkennbaren Minimums der Verlustkurve einpendelt. Typische Temperaturen sind bei einer (wie weiter unten noch näher ausgeführt) größenordnungsmäßig auftretenden magnetischen Induktion von knapp 400 mT im Bereich von 80 - 100 °C. Diese große magnetische Induktion ist in Fig. 10 nicht erfaßt, weil es sich dabei um einen technisch sonst nicht verwendeten Bereich handelt. Zu der Bedeutung der Sättigung bei diesem Ausführungsbeispiel wird jedoch auch auf die Erläuterungen zu den Fig. 12 und 13 verwiesen.

Fig. 11 zeigt einen typischen realen zeitlichen Verlauf des Primärkreisstroms in Abhängigkeit von der Zeit t. Nach dem Einschalten des Schalttransistors $T_Q$ ergibt sich zunächst der typische Anstieg, der bereits aus der mehrfach zitierten Voranmeldung bekannt ist. Man erkennt, daß der Schalttransistor $T_Q$ nach Durchlaufen des Maximums der Primärkreisstromkurve ausgeschaltet wird, nämlich dort, wo sich der Knick zu dem dann sehr schnellen Abfall des Primärkreisstroms $I_{W1}$ ergibt. Als Schaltzeitpunkt $t_{aus}$ ist der Zeitpunkt ausgewählt, zu dem die Kurve des Primärkreisstroms $I_{W1}$, wenn nicht ausgeschaltet würde, wieder weiter ansteigen würde, wie gestrichelt dargestellt. Der mit dem Strommaximum verbundene Anstieg des Primärkreisstroms über die lineare Transformatoraufladung hinaus entsteht vermutlich durch die Hinzündung, die durch den starken Abfall des Ohmschen Widerstandes der Entladungslampe L gewissermaßen Strom aus der Sekundärwicklung W2 "zieht". Dieser Schaltzeitpunkt ist hinsichtlich der Schaltverluste in der bzw. den Schalttransistoren $T_Q$ optimal, weil mit minimalem Strom geschaltet wird.

In Fig. 12 ist der Primärkreisstrom $I_{W1}$ im unteren Bereich dargestellt; im oberen Bereich findet sich der Sekundärkreisstrom $I_{W2}$. Die Stromnullpunkte sind dabei gegeneinander verschoben, um die Kurven besser miteinander in Beziehung setzen zu können. Entsprechendes gilt für die Darstellung in Fig. 13, die einen Puls des Primärkreisstroms $I_{W1}$ und des Sekundärkreisstroms $I_{W2}$ aus Fig. 12 vergrößert darstellt. In Fig. 13 erkennt man den steilen Abfall des Primärkreisstroms $I_{W1}$ nach dem Zeitpunkt $t_{aus}$. Gleichzeitig erkennt man, daß auf der Sekundärseite des Transformators T eine Rückschwingung einsetzt, die zu einem entgegengesetzt gepolten Puls des Sekundärkreisstroms $I_{W2}$ führt, nämlich zu der erfindungsgemäßen Rückzündung. Man erkennt sehr schön, daß der über einen vergleichsweise etwas längeren Zeitraum (im wesentlichen zwischen $t_{ein}$ und $t_{aus}$) ablaufenden Hinzündung, also dem ersten Puls des Sekundärkreisstroms $I_{W2}$, ein sehr viel heftigerer und kürzerer Rückzündungspuls folgt. Dies entspricht genau dem erfindungsgemäßen Mechanismus, gemäß dem die Hinzündung in der Nichtsättigungsphase des Transformators T zumindest vorbereitet wird, oder ganz abläuft, nämlich nach $t_{ein}$, während die Rückzündung größtenteils bei stark ausgesteuertem Transformator T abläuft.

Der in Fig. 13 eingezeichnete Zeitpunkt $t_R$ entspricht dem bereits an anderer Stelle erwähnten Zeitpunkt, zu dem der Sekundärstrom 20 % seines Maximums während der Rückzündung erreicht hat. In diesem für die Zwecke dieser Beschreibung den Anfangsbereich der Rückzündung charakterisierenden Zeitpunkt ist bei diesem Ausführungsbeispiel bereits eine deutliche Sättigung des Transformators T gegeben, wie sich aus den weiter unten folgenden Zahlenwerten ersehen läßt.

Fig. 13 zeigt außerdem, daß die Sekundärstromkurve $I_{W2}$ der Hinzündungsphase der Primärstromkurve $I_{W1}$ sowohl in der Form als auch in der zeitlichen Positionierung recht genau entspricht. Dies ist ein typischer (wenngleich nicht notwendiger) Effekt der Erfindung. Tatsächlich treten bei einem Transformator üblicherweise Phasenverschiebungen auf, weil der Induktionsstrom der zeitlichen Ableitung des Erregerstroms proportional ist. Wegen des Induktionsmechanismus im Transformator T sollte der Strom $I_{W2}$ bei einem Steigungsmaximum des Stromes $I_{W1}$ ein Maximum zeigen und danach wieder abfallen. Dies entspricht jedoch nicht dem Verlauf in Fig. 13. Im vorliegenden Fall gibt es keinen dem Anstieg des Primärkreisstromes $I_{W1}$ unmittelbar vorangehenden Sekundärstrompuls. Das einem Primärkreisstrompuls "Folgen" des Sekundärkreisstromes $I_{W2}$ ist nicht zu beobachten. Im Gegenteil: Der Strom $I_{W2}$ steigt zeitgleich mit $I_{W1}$ an.

Für den Zeitverlauf des Sekundärkreisstroms $I_{W2}$ ist nämlich weiterhin das zeitliche Verhalten der Impedanz der Lampe L von Bedeutung. Diese wird nach der anfänglichen Vorionisation und nach der Spannungseinprägung in den Sekundärkreis zunehmend niederohmig, so daß der Sekundärkreisstrom $I_{W2}$ trotz der abnehmenden Steigung des Primärkreisstroms $I_{W1}$ weiter ansteigt. Der für die dielektrisch behinderten Entladungen typische Effekt der zunehmenden Polarisation in der Lampe L sorgt im weiteren Verlauf für ein Wiederabfallen des Sekundärkreisstroms $I_{W2}$. Dementsprechend fällt auch der Primärkreisstrom $I_{W1}$ langsam ab. Im Ausschaltzeitpunkt $t_{aus}$ fällt neben $I_{W1}$ auch $I_{W2}$ relativ schnell auf Null ab, weil durch die große umgekehrte Zeitableitung des Primärkreisstroms im Sekundärkreis ein Gegenspannungspol induziert wird.

Insgesamt ergibt sich in dem Zusammenspiel zwischen dem Transformator T und dem zeitabhängigen Verhalten der Lampe L eine relativ direkte Entsprechung zwischen den Strömen $I_{W1}$ und $I_{W2}$. Dadurch wird der Sättigungseffekt, den man bei Leistungsübertragern bei großen Stromaussteuerungen durch die Phasenverschiebungen zwischen Primärseite und Sekundärseite erwarten müßte, praktisch verhindert. Eine Transformatorsättigung findet bei diesem Ausführungsbeispiel also nur während der Rückzündungsphase statt, in der der Primärkreisstrom $I_{W1}$ auf Null liegt.

Die Erfindung bezieht sich jedoch nicht nur auf solche Ausführungsbeispiele. Auch bei anderen Formen der Stromverläufe und Sättigungseffekten schon in der Hinzündungsphase würde der erfindungsgemäße Mechanismus insoweit funktionieren, als jedenfalls in der Anfangsphase der Hinzündung schon allein wegen der Kleinheit des Primärkreisstroms $I_{W1}$ keine Sättigung und damit keine Induktivitätsverkleinerung auftreten kann.

Im übrigen hat sich für die Rückzündung eine abgebremste Flankensteilheit am Beginn auch nicht als Vorteil gezeigt. Die Rückzündung scheint durch die Hinzündung hinsichtlich der Entladungsstruktur vorgeprägt zu sein. Im Gegenteil ist es im Rahmen der Erfindung bevorzugt, daß zu einem möglichst frühen Zeitpunkt der Rückzündung bereits der Sättigungseffekt und damit die Induktivitätsverringerung im Sekundärkreis eintritt. Damit kann erreicht werden, daß der Sekundärstrom rasch und mit großer Amplitude im Rückzündungspuls durchschwingt. Wie bereits erläutert, führt die Induktivitätserniedrigung daneben zu einer Impedanzverringerung im Sekundärkreis und damit zu erwünschtermaßen großen Sekundärkreisströmen.

An die in der mehrfach zitierten Voranmeldung enthaltenen Diskussionen über die Unterschiede zwischen den Funktionsprinzipien Sperrwandler und Flußwandler anknüpfend ist noch zu bemerken, daß es bei dem in dieser Anmeldung behandelten Flußwandlerprinzip hinsichtlich der Rückzündung wegen der galvanischen Trennung durchaus zu einer zusätzlichen Sperrwandlerfunktion kommen kann. Der in den Figuren 12 und 13 erkennbare plötzliche Primärkreisstromabfall nach dem Ausschalten des Schalttransistors $T_Q$ bedingt nämlich einen entsprechenden Induktionsspannungspuls auf der Sekundärseite nach dem Sperrwandlerprinzip, jedoch wird die Hinzündung nach dem Flußwandlerprinzip erzeugt.

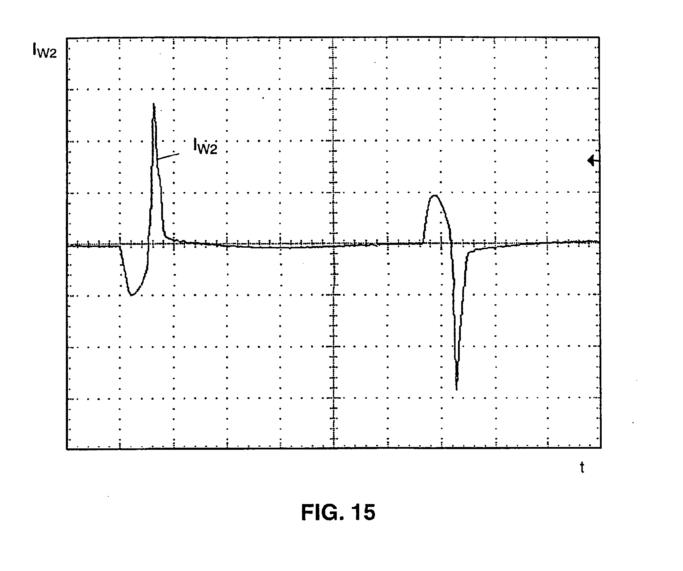

Entsprechende Stromverläufe zeigen auch die Fig. 14 (Primärkreisstrom $I_{W1}$) und Fig. 15 (Sekundärkreisstrom $I_{W2}$) für den Fall des Gegentaktverfahrens mit der Schaltung nach Fig. 3. Der einzige Unterschied zu den Stromverläufen nach Fig. 12 besteht in der Alternierung der Vorzeichen zwischen aufeinanderfolgenden Wirkleistungspulsen. Dadurch können durch Asymmetrien zwischen Hin- und Rückzündungen entstehende Alkali-Ionenwanderungseffekte (Schwärzungserscheinungen) ausgeschlossen werden. Eine verbesserte Lebensdauer der Entladungslampe L ist die Folge. Es ist natürlich nicht zwingend, daß die Totzeiten zwischen den Wirkleistungspulsen entgegengesetzter Polarität völlig symmetrisch sind, wenngleich man im allgemeinen einen bevorzugten Wert für die Totzeit einstellen wird. Im Prinzip sind aber auch abwechselnd kürzere und längere Totzeiten denkbar bis hin zu einer Situation, in der die Rückleistungspulse entgegengesetzter Polarität unmittelbar aufeinander folgen, also gemeinsam einen Wirkleistungspuls bilden und nicht durch eine Totzeit getrennt sind.

Im einzelnen gelten für die Ausführungsbeispiele folgende technische Daten: Der maximale Primärkreisstrom $I_{W1\,max}$ beträgt 14A und der Primärkreisstrom zum Ausschaltzeitpunkt $t_{aus}$ beträgt 10A. Dabei beträgt die Versorgungsspannung 24V. Der Speicherkondensator $C_Q$ ist durch fünf parallel geschaltete keramische Mehrschichtkondensatoren mit jeweils 10µF realisiert. Der Schalttransistor $T_Q$ ist ein BUZ104S der Firma Infineon AG. Mit den verwendeten Transformatoren (2 Ringkerntransformatoren mit Kern R 14, N87, Primärwindungszahl 2, Sekundärwindungszahl 140, magnetische Weglänge 3,5 cm) entsteht damit bei der Rückzündung eine maximale magnetische Feldstärke $H_{max}$ von 2280 A/m bei einem Sekundärstrom $I_{W2 max}$ = 0,57 A. Für die magnetische Induktion in der Anfangsphase der Rückzündung, also zu dem Zeitpunkt $t_R$, zu dem der Sekundärstrom $I_{W2}$ 20 % des Maximalstroms $I_{W2max}$ erreicht hat, gilt B ($t_R$) = 368 mT. Zum Vergleich: die Sättigungsmagnetisierung $J_S$ des verwendeten Kernmaterials N87 der EPCOS AG liegt bei etwa 100° C bei etwa 374 mT.

Im bipolaren Fall gemäß den Figuren 3, 14 und 15 beträgt $I_{W1}$ ($t_{aus}$) = 6A, $I_{W2 max}$ = 0,66A, $H_{max}$ = 2640 A/m und in der Anfangsphase der Rückzündung, also zum Zeitpunkt $t_R$, besitzt die Induktion B ($t_R$) einen Wert von 369 mT. Die Sättigung des Kerns liegt also bereits kurz nach dem Vorzeichenwechsel des Sekundärkreisstromes $I_{W2}$ vor.

In beiden Fällen lag die Transformatortemperatur bei etwa 90° C (zwischen 80° und 100° C) und damit in einem hinsichtlich der Verluste günstigen Bereich. Das Kernvolumen betrug insgesamt (auf zwei Transformatoren verteilt) 860 mm$^3$ und zeigte magnetische Gesamtverluste von etwa 2W. Damit lassen sich bei außerordentlich kleiner Baugröße des Vorschaltgeräts sehr gute Effizienzwerte erzielen. Dabei war es möglich, die Größe des Vorschaltgeräts durch die drastische Verringerung der Transformatorgröße bei einer Lampenleistung von 21,5W auf die Größe einer Streichholzschachtel zu reduzieren, wobei durch weitere Optimierungsmaßnahmen vor allem hinsichtlich der Packung der einzelnen Elemente innerhalb des Vorschaltgeräts noch zusätzliche Volumeneinsparungen zu erwarten sind.

Die bei den Ausführungsbeispielen verwendete Entladungslampe L ist eine stabförmige stille Leuchtstofflampe mit zwei innenliegenden Elektroden. Die Lampenlänge beträgt 29 cm, der äußere Durchmesser 10 mm, bei einer Wanddicke von 0,6mm. Die Füllung besteht aus Xe bei 170 mbar.

Mit den obigen Zahlenwerten kann man für die nach konventioneller fachmännischer Ansicht sinnvolle Aussteuerung folgende Abschätzung vornehmen: bei einer Systemsteuerung von etwa 20 W und einer zulässigen Verlustleistung von 2 W (pro Transformator 1 W führt mit einem thermischen Widerstand von etwa 80 K/W auf ca. 100° C), würde sich bei dem obigen Kernvolumen von pro Trafo von 430 mm$^3$ als magnetischer Grenzverlust ergeben: 2325 kW/m$^3$. Bei Pulsbreiten im Bereich von 500 ns und einer angenommenen Frequenz von 1MHz ergibt sich dabei für einen (hier nicht realisierten) kontinuierlichen Sinusbetrieb eine Aussteuerung von 70 mT als Maximum. Wenn man im Hinblick auf das gepulste Betriebsverfahren ein PulsPausen-Verhältnis von 1: 10 annimmt, so erhöht sich dieser Wert natürlich, weil die Verluste pro Puls zeitlich gemittelt werden müssen.

Nimmt man an, daß der Kern thermisch standhält und linear extrapoliert werden kann (die Verluste steigen mit der Aussteuerung eigentlich überlinear), so ergeben sich dabei als absolute Maximalwerte Aussteuerungen von ca. 170 mT. Diese konventionellen Betrachtungen werden durch die obigen Aussteuerungen also deutlich überschritten.

**Patentansprüche**

1. Betriebsverfahren für eine Entladungslampe (L) mit einer dielektrischen Schicht zwischen zumindest einer Elektrode und einem Entladungsmedium unter Verwendung eines Vorschaltgeräts mit einem leistungsversorgten Primärkreis (P), einem die Entladungslampe (L) enthaltenen Sekundärkreis (S) sowie einem den Primärkreis (P) mit dem Sekundärkreis (S) verbindenden Transformator (T), bei welchem Verfahren dem Sekundärkreis (S) aus dem Primärkreis (P) über den Transformator (T) nach dem Flußwandlerprinzip ein Spannungspuls eingeprägt wird, der zu einer eine Zündung bewirkenden äußeren Spannung ($U_L$) an der Entladungslampe (L) und zu einer inneren Gegenpolarisation in der Entladungslampe (L) führt, **dadurch gekennzeichnet, daß** der Sekundärkreis (S) nach dem Einprägen des Spannungspulses eine Teilschwingung ausführt, durch die die die äußere Spannung ($U_L$) an der Entladungslampe (L) bewirkende Ladung von der Entladunglampe (L) abgezogen wird, wodurch die Entladungslampe (L) durch die verbleibende innere Gegenpolarisation zu einer Rückzündung geführt wird, und daß eine für die zeitliche Veränderung eines Stroms ($I_{W1}$, $I_{W2}$) durch den Transformator (T) maßgebliche Induktivität ($L_{W1}$, $L_{W2}$) innerhalb eines eine Hinzündung und eine Rückzündung enthaltenden Zeitraums zeitlich so verändert wird, daß die veränderte Induktivität ($L_{W1}$, $L_{W2}$) in einer Anfangsphase der Einprägung des zu der Hinzündung führenden Spannungspulses wesentlich größer ist als in zumindest einem Teil der Rückzündungsphase, in der die Ladung von der Entladungslampe (L) nach der Hinzündung abgezogen wird und die Rückzündung erfolgt.

2. Betriebsverfahren nach Anspruch 1, bei dem die Primärkreisinduktivität ($L_{W1}$) durch ein zeitlich veränderliches Hinzuschalten einer Induktivität verändert wird.

3. Betriebsverfahren nach Anspruch 1 oder 2, bei dem der Transformator (T) in einem Sättigungsbetrieb verwendet wird, wobei sich die Veränderung der Induktivität ($L_{w1}$, $L_{w2}$) zumindest teilweise aus einer Veränderung der relativen Permeabilität ($\mu$) des Kerns des Transformators (T) ergibt.

**4.** Betriebsverfahren nach einem der vorstehenden Ansprüche, bei dem der Sekundärkreis (S) nach der Hinzündung durch die äußere Spannung ($U_L$) als Schwingkreis isoliert ist.

**5.** Betriebsverfahren nach einem der vorstehenden Ansprüche, bei dem während der Rückzündungsphase praktisch kein Primärkreisstrom ($I_{W2}$) fließt.

**6.** Betriebsverfahren nach einem der vorstehenden Ansprüche, zumindest Anspruch 3, bei dem nach der Hinzündung durch die äußere Spannung ($U_L$) der Primärkreisstrom ($I_{W1}$) durch den Transformator (T) zu einem Zeitpunkt unterbrochen wird, zu dem der Primärkreisstrom ($I_{W1}$) nach der Hinzündung ein Minimum zeigen würde.

**7.** Betriebsverfahren nach einem der vorstehenden Ansprüche, bei dem der Primärkreis (P) über einen MOSFET-Schalter ($T_Q$) mit Freilaufdiode getaktet wird.

**8.** Betriebsverfahren nach einem der vorstehenden Ansprüche, bei dem die Primärkreisinduktivität ($L_{W1}$) so verändert wird, daß sie am Beginn des zu der Hinzündung führenden Spannungspulses in dem Sekundärkreis (S) zumindest dreimal so groß ist ($L_{W1}$ ($t_{ein}$)) wie bei ihrem Minimum.

**9.** Betriebsverfahren nach einem der vorstehenden Ansprüche, zumindest Anspruch 3, bei dem die magnetische Induktion (B ($t_R$)) zu einem Zeitpunkt ($t_R$) während der Rückzündung, zu dem der Sekundärstrom ($I_{W2}$) 20 % seines Maximalwertes ($I_{W2max}$) während der Rückzündung erreicht hat, 70 % der magnetischen Sättigungsinduktion ($J_S$) des Transformators (T) beträgt.

**10.** Betriebsverfahren nach Anspruch 9, bei dem die Sättigungsinduktion ($J_S$) zumindest 350 mT beträgt.

**11.** Betriebsverfahren nach einem der vorstehenden Ansprüche, bei dem die Halbwertsbreite des Sekundärstromes ($I_{W2}$) in der Rückzündung kleiner als 800 ns ist.

**12.** Betriebsverfahren nach einem der vorstehenden Ansprüche, bei dem der Transformator (T) einen Kern ohne Luftspalt aufweist.

**13.** Betriebsverfahren nach Anspruch 12, bei dem der Kern des Transformators (T) aus einem MnZn-Ferrit-Material besteht, insbesondere aus dem Material N87 des Herstellers EPCOS AG.

**14.** Betriebsverfahren nach einem der vorstehenden Ansprüche, bei dem die Einprägung des zur Hinzündung führenden Spannungspulses nach einem Gegentaktverfahren bipolar alternierend erfolgt.

**15.** Betriebsverfahren nach einem der vorstehenden Ansprüche, bei dem der Primärkreis (P) aus einer Quelle (Q) mit einem keramischen Mehrschichtkondensator ($C_Q$) als Speicherkondensator leistungsversorgt wird.

**16.** Betriebsverfahren nach einem der vorstehenden Ansprüche, bei dem in dem Sekundärkreis (S) ein Mittenabgriff des Transformators (T) als Bezugspotential verwendet wird.

**17.** Beleuchtungssystem mit einer Entladungslampe (L) mit einer dielektrischen Schicht zwischen zumindest einer Elektrode und einem Entladungsmedium und einem Vorschaltgerät mit einem leistungsversorgten Primärkreis (P), einem Sekundärkreis (S), in den die Entladungslampe (L) geschaltet ist, sowie einem den Primärkreis P mit dem Sekundärkreis (S) verbindenden Transformator (T),
**dadurch gekennzeichnet, daß** das Beleuchtungssystem zu einem Betriebsverfahren nach einem der vorstehenden Ansprüche ausgelegt ist.

**18.** Beleuchtungssystem nach Anspruch 17, bei dem die Länge der elektrischen Leitungen zwischen dem Vorschaltgerät und der Entladungslampe (L) höchstens 10 cm beträgt.

**19.** Beleuchtungssystem nach Anspruch 18, bei dem das Vorschaltgerät in einem Sockelgehäuse der Entladungslampe (L) enthalten ist.

**20.** Vorschaltgerät für eine Entladungslampe (L) mit einer dielektrischen Schicht zwischen zumindest einer Elektrode und einem Entladungsmedium, mit einem leistungsversorgten Primärkreis (P), einem Sekundärkreis (S) für die Entladungslampe (L) sowie einem den Primärkreis (P) mit dem Sekundärkreis (S) verbindenden Transformator (T), wobei das Vorschaltgerät ausgelegt ist für ein Betriebsverfahren nach einem der Ansprüche 1 - 16.

**Claims**

**1.** Operating method for a discharge lamp (L) with a dielectric layer between at least one electrode and a discharge medium,
which method uses a ballast having a power-supplied primary circuit (P), a secondary circuit (S) containing the discharge lamp (L), and a transformer (T) connecting the primary circuit (P) to the secondary circuit (S),
and in which method a voltage pulse is impressed on the secondary circuit (S) from the primary circuit (P) via the transformer (T) using the forward transformer principle and leads to an external voltage ($U_L$) across the discharge lamp (L) which effects ignition, and to an internal counterpolarization in the discharge lamp (L),

**characterized in that**, after the impression of the voltage pulse, the secondary circuit (S) executes a half wave by means of which the charge effecting the external voltage ($U_L$) across the discharge lamp (L) is removed from the discharge lamp (L), as a result of which the discharge lamp (L) is caused to execute a back ignition owing to the remaining internal counterpolarization,

and **in that** an inductance ($L_{W1}$, $L_{W2}$) governing the temporal variation in a current ($I_{W1}$, $I_{W2}$) through the transformer (T) is varied temporally within a period including a forward ignition and a back ignition such that the altered inductance ($L_{W1}$, $L_{W2}$) is substantially larger in an initial phase of the impression of the voltage pulse which leads to the forward ignition than in at least a portion of the back ignition phase, in which the charge is removed from the discharge lamp (L) after the forward ignition and the back ignition is performed.

2. Operating method according to Claim 1, in which the primary circuit inductance ($L_{W1}$) is varied by switching in an inductor in a temporally variable fashion.

3. Operating method according to Claim 1 or 2, in which the transformer (T) is used in a saturation mode, the variation in the inductance ($L_{w1}$, $L_{w2}$) resulting at least partially from a variation in the relative permeability ($\mu$) of the core of the transformer (T).

4. Operating method according to one of the preceding claims, in which the secondary circuit (S) is isolated as a resonant circuit after the forward ignition by the external voltage ($U_L$).

5. Operating method according to one of the preceding claims, in which virtually no primary circuit current ($I_{W2}$) flows during the back ignition phase.

6. Operating method according to one of the preceding claims, at least Claim 3, in which after the forward ignition by the external voltage ($U_L$), the primary circuit current ($I_{W1}$) through the transformer (T) is interrupted at an instant at which the primary circuit current ($I_{W1}$) would exhibit a minimum after the forward ignition.

7. Operating method according to one of the preceding claims, in which the primary circuit (P) is clocked via a MOSFET switch ($T_Q$) with a freewheeling diode.

8. Operating method according to one of the preceding claims, in which the primary circuit inductance ($L_{W1}$) is varied such that at the start of the voltage pulse,

leading to the forward ignition, in the secondary circuit (S) it is at least three times as large ($L_{w1}(t_{on})$) as at its minimum.

9. Operating method according to one of the preceding claims, at least Claim 3, in which the magnetic induction (B ($t_R$)) at an instant ($t_R$) during the back ignition at which the secondary current ($I_{W2}$) has reached 20% of its maximum value ($I_{W2max}$) during the back ignition, is 70% of the magnetic saturation induction ($J_S$) of the transformer (T).

10. Operating method according to Claim 9, in which the saturation induction ($J_S$) is at least 350 mT.

11. Operating method according to one of the preceding claims, in which the half-value width of the secondary current ($I_{W2}$) in the back ignition is smaller than 800 ns.

12. Operating method according to one of the preceding claims, in which the transformer (T) has a core without an air gap.

13. Operating method according to Claim 12, in which the core of the transformer (T) consists of an MnZn ferrite material, in particular of the material N87 from the manufacturer EPCOS AG.

14. Operating method according to one of the preceding claims, in which the impression of the voltage pulse leading to the forward ignition is performed in a bipolar alternating fashion using a push-pull method.

15. Operating method according to one of the preceding claims, in which the primary circuit (P) is supplied with power from a source (Q) with a ceramic multilayer capacitor ($C_Q$) as storage capacitor.

16. Operating method according to one of the preceding claims, in which a center tap of the transformer (T) is used in the secondary circuit (S) as reference potential.

17. Illuminating system having a discharge lamp (L) with a dielectric layer between at least one electrode and a discharge medium and with a ballast having a power-supplied primary circuit (P), a secondary circuit (S) into which the discharge lamp (L) is switched, and a transformer (T) connecting the primary circuit (P) to the secondary circuit (S),

**characterized in that** the illuminating system is designed for an operating method according to one of the preceding claims.

18. Illuminating system according to Claim 17, in which the length of the electric lines between the ballast and the discharge lamp (L) is at most 10 cm.

**19.** Illuminating system according to Claim 18, in which the ballast is incorporated in a base housing of the discharge lamp (L).

**20.** Ballast for a discharge lamp (L) with a dielectric layer between at least one electrode and a discharge medium, having a power-supplied primary circuit (P), a secondary circuit (S) for the discharge lamp (L), and a transformer (T) connecting the primary circuit (P) to the secondary circuit (S),
the ballast being designed for an operating method according to one of Claims 1-16.

**Revendications**

**1.** Procédé pour faire fonctionner une lampe ( L ) à décharge ayant une couche diélectrique entre au moins une électrode et un milieu de décharge
en utilisant un ballast ayant un circuit ( P ) primaire alimenté en puissance, un circuit ( S ) secondaire comportant la lampe ( L ) à décharge, ainsi qu'un transformateur ( T ) reliant le circuit ( P ) primaire au circuit ( S ) secondaire, procédé dans lequel on injecte du circuit ( P ) primaire au circuit ( S ) secondaire, en passant par le transformateur ( T ), suivant le principe du convertisseur de flux, une impulsion de tension, qui donne sur la lampe ( L ) à décharge une tension ( $U_L$ ) extérieure provoquant un amorçage et une contre-polarisation intérieure de la lampe ( L ) à décharge, **caractérisé en ce que** le circuit ( S ) secondaire réalise, après l'injection de l'impulsion de tension, une oscillation partielle par laquelle la charge provoquant la tension ( $U_L$ ) extérieure sur la lampe ( L ) à décharge est soustraite de la lampe ( L ) à décharge, de sorte que la lampe ( L ) à décharge est amenée par la contre-polarisation intérieure qui subsiste à un amorçage inverse,
et **en ce que** l'on modifie dans le temps, à l'intérieur d'un laps de temps comprenant un amorçage et un amorçage inverse, une inductance ( $L_{W1}$, $L_{W2}$ ) déterminante pour la modification dans le temps d'un courant ( $I_{W1}$, $I_{W2}$ ) par le transformateur ( T ), de manière à ce que l'inductance ( $L_{W1}$, $L_{W2}$ ) modifiée soit dans une phase de début de l'injection de l'impulsion de tension menant à l'amorçage sensiblement plus grande que dans au moins une partie de la phase d'amorçage inverse, dans laquelle la charge est soustraite de la lampe ( L ) à décharge après l'amorçage et l'amorçage inverse s'effectue.

**2.** Procédé suivant la revendication 1, dans lequel on modifie l'inductance ( $L_{W1}$ ) primaire en branchant, de manière variable dans le temps, une inductance.

**3.** Procédé suivant la revendication 1 ou 2, dans lequel on utilise le transformateur ( T ) dans un fonctionnement à saturation, la modification de l'inductance ( $L_{W1}$, $L_{W2}$ ) étant obtenue au moins à partir d'une modification de la perméabilité ( $\mu$ ) relative du noyau du transformateur ( T ).

**4.** Procédé suivant l'une des revendications précédentes, dans lequel on isole, comme circuit oscillant, le circuit ( S ) secondaire après l'amorçage par la tension ( $U_L$ ) extérieure.

**5.** Procédé suivant l'une des revendications précédentes, dans lequel, pendant la phase d'amorçage inverse, il ne passe pratiquement pas de courant ( $I_{W2}$ ) de circuit primaire.

**6.** Procédé suivant l'une des revendications précédentes, au moins suivant la revendication 3, dans lequel après l'amorçage par la tension ( $U_L$ ) extérieure, on interrompt le courant ( $I_{W1}$ ) du circuit primaire par le transformateur ( T ) à un instant où le courant ( $I_{W1}$ ) de circuit primaire passerait par un minimum après l'amorçage.

**7.** Procédé suivant l'une des revendications précédentes, dans lequel on cadence le circuit ( P ) primaire par un commutateur ( $T_Q$ ) MOSFET ayant une diode de roue libre.

**8.** Procédé suivant l'une des revendications précédentes, dans lequel on modifie l'inductance ( $L_{W1}$ ) du circuit primaire, de manière à ce que, au début de l'impulsion de tension menant à l'amorçage dans le circuit ( S ) secondaire, elle soit au moins trois fois aussi grande ( $LW1$ ( $t_{ein}$ ) ) qu'à son minimum.

**9.** Procédé suivant l'une des revendications précédentes, au moins suivant la revendication 3, dans lequel l'induction ( B ( $t_R$ ) ) magnétique à un instant ( $t_R$ ) pendant l'amorçage inverse, où le courant ( $I_{W2}$ ) secondaire a atteint 20 % de sa valeur ( $I_{W2}$ ) maximum pendant l'amorçage inverse, représente 70 % de l'induction ( $J_S$ ) magnétique de saturation du transformateur ( T ).

**10.** Procédé suivant la revendication 9, dans lequel l'induction ( $J_S$ ) de saturation est d'au moins 350 mT.

**11.** Procédé suivant l'une des revendications précédentes, dans lequel la largeur à mi-valeur du courant ( $I_{W2}$ ) secondaire d'un amorçage inverse est inférieur à 800ns.

**12.** Procédé suivant l'une des revendications précédentes, dans lequel le transformateur ( T ) a un noyau sans entrefer.

**13.** Procédé suivant la revendication 12, dans lequel le noyau du transformateur ( T ) est en un matériau Mn-Zn-ferrite, notamment en le matériau N87 du fabricant EPCOS AG.

**14.** Procédé suivant l'une des revendications précédentes, dans lequel l'injection de l'impulsion de tension menant à l'amorçage s'effectue en alternance bipolairement par un procédé symétrique.

**15.** Procédé suivant l'une des revendications précédentes, dans lequel le circuit ( P ) primaire est alimenté en puissance par une source ( Q ) ayant un condensateur ( $C_Q$ ) multicouche en céramique comme condensateur d'accumulation.

**16.** Procédé suivant l'une des revendications précédentes, dans lequel on utilise dans le circuit ( S ) secondaire une prise médiane du transformateur ( T ) comme potentiel de référence.

**17.** Système d'éclairage comprenant une lampe ( L ) à décharge ayant une couche diélectrique entre au moins une électrode et un milieu de décharge et un ballast ayant un circuit ( P ) primaire alimenté en puissance, un circuit ( S ) secondaire dans lequel la lampe ( L ) à décharge est montée, ainsi qu'un transformateur ( T ) reliant le circuit ( P ) primaire au circuit ( S ) secondaire, **caractérisé en ce que** le système d'éclairage est conçu pour un procédé de fonctionnement selon l'une des revendications précédentes.

**18.** Système d'éclairage suivant la revendication 17, dans lequel la longueur des lignes électriques entre le ballast et la lampe et la décharge est au plus de 10 cm.

**19.** Système d'éclairage suivant la revendication 18, dans lequel le ballast est contenu dans un boîtier de culot de la lampe ( L ) à décharge.

**20.** Ballast pour une lampe ( L ) à décharge comprenant une couche diélectrique entre au moins une électrode et un milieu de décharge,
comprenant un circuit ( P ) primaire alimenté en tension, un circuit ( S ) secondaire pour la lampe ( L ) à décharge, ainsi qu'un transformateur ( T ) reliant le circuit ( T ) primaire au circuit ( S ) secondaire,
dans lequel le ballast est conçu pour un procédé de fonctionnement suivant l'une des revendications 1 à 16.

P              T       S

W1      W2     L

$C_Q$

Q

SE

$T_Q$

**FIG. 1**

W1     W2 ≡

**FIG. 2**

**FIG. 3**

**FIG. 4**

**FIG. 5**

**FIG. 6**

**FIG. 7**

**FIG. 8**

**FIG. 9**

**FIG. 10**

FIG. 11

FIG. 12

$I_{W2}$

$I_{W1}$

$t_{ein}$    $t_{aus}$  $t_R$

## FIG. 13

$I_{W1}$

$I_{W1}$

t

## FIG. 14

**FIG. 15**

# EP 1 177 711 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9423442 A
- WO 0013472 A

- DE 19734885